# EUROPÄISCHE PATENTANMELDUNG

(11) **EP 1 596 043 A2**
(43) Veröffentlichungstag der Anmeldung: **16.11.2005**
(21) Anmeldenummer: 05009404.4
(22) Anmeldetag: 29.04.2005
(51) Int. Cl.: F01M 11/04, F16H 57/04

(54) **Vorrichtung zum Befüllen oder Entleeren eines Aggregates**

(30) Priorität: 14.05.2004 DE 102004024083
(71) Anmelder: AUDI AG, 85045 Ingolstadt (DE)
(72) Erfinder: Fleischmann, Hans-Peter, 85134 Stammham (DE)

(57) **Zusammenfassung**

Die Erfindung betrifft eine Vorrichtung zum Befüllen oder Entleeren eines Aggregates mit Schmiermittel und/oder Hydraulikfluid, insbesondere in Kraftfahrzeugen, mit einer Befüllschraube (22) und/oder Ablassschraube, die in eine durchgehende Gewindebohrung des Gehäuses des Aggregates (16) eingeschraubt ist. In kostengünstiger und fertigungstechnisch einfacher Weise wird vorgeschlagen, dass die Befüllschraube (22) und/oder Ablassschraube eine am Aggregat (16) ohnehin vorhandene Schraube ist, die als Befestigungsschraube ein Anbauteil am Gehäuse des Aggregates durchdringt, wobei die korrespondierende Gewindebohrung im Gehäuse durchgehend ausgeführt ist.

## Beschreibung

Die Erfindung betrifft eine Vorrichtung zum Befüllen oder Entleeren eines Aggregates mit einem Schmiermittel und/oder einem Hydraulikfluid, insbesondere in Kraftfahrzeugen, gemäß dem Oberbegriff des Patentanspruches 1.

Zum Befüllen von Aggregaten mit Schmiermittel und/oder Hydraulikfluid, insbesondere in Kraftfahrzeugen, ist es bekannt, an möglichst gut zugänglicher Stelle eine separate Befüllschraube mit einer entsprechenden, durchgehenden Gewindebohrung im Gehäuse des Aggregates vorzusehen, durch die hindurch das Fluid einfüllbar ist. Die Befüllschraube kann z. B. bei Geschwindigkeits-Wechselgetrieben oder Achsdifferenzialen in einer derartigen Höhe seitlich am Gehäuse angeordnet sein, dass sie zugleich die Kontrolle des Fluidstandes ermöglicht. Entsprechend kann eine Ablassschraube in einem unteren Bereich angeordnet sein.

Aufgabe der Erfindung ist es, eine Vorrichtung der gattungsgemäßen Art vorzuschlagen, die kostengünstiger und fertigungstechnisch einfacher ist.

Diese Aufgabe wird erfindungsgemäß mit den kennzeichnenden Merkmalen des Patentanspruches 1 gelöst. Vorteilhafte Weiterbildungen der Erfindung sind den weiteren Patentansprüchen entnehmbar.

Erfindungsgemäß wird vorgeschlagen, dass die Befüllschraube und/oder Ablassschraube eine am Aggregat ohnehin vorhandene Schraube ist, die als Befestigungsschraube ein Anbauteil am Gehäuse des Aggregates durchdringt, wobei die korrespondierende Gewindebohrung im Gehäuse durchgehend ausgeführt ist.

Das Aggregat kann z. B. eine Brennkraftmaschine, ein Geschwindigkeits-Wechselgetriebe jeglicher Bauart, ein Achsdifferenzial, etc., insbesondere in Kraftfahrzeugen, sein. Das Anbauteil kann ein jegliches Funktionsteil sein, das an das Gehäuse des Aggregates mittels Befestigungsschrauben angebaut ist und das in definierter, für den beanspruchten Zweck geeigneter Stelle am Aggregat vorhanden ist, z. B. ein Halter für Zusatzaggregate, elektrische Bauteile, Auspuffanlagen, jegliche Art von Flanschen, etc. Über die besagte Befüllschraube kann z. B. Motoröl bei Brennkraftmaschinen, Getriebeöl bei Schaltgetrieben, ATF Hydraulikfluid bei automatischen Getrieben, Hypoidöl bei Differenzialen, etc. eingefüllt werden. Je nach Lage kann diese Befüllschraube gegebenenfalls auch als Ablassschraube verwendet werden oder eine zusätzliche Ablassschraube angebracht werden.

Die Befüllschraube und/oder Ablassschraube kann in an sich bekannter Weise eine Farb- und/oder Formkennzeichnung an deren Kopf aufweisen und somit als Befüllschraube ohne weiteres erkannt werden. Damit wird ausgeschlossen, dass eine Verwechslung mit anderen Befestigungsschrauben auftritt.

Ferner kann die Befüllschraube in einer Höhe am Gehäuse des Aggregates angeordnet sein, die dem regulären Füllstand des in das Aggregat eingefüllten Fluids entspricht. Damit kann der Fluidstand durch Herausschrauben der Befüllschraube und ggf. Einführen eines Messdrahtes überprüft werden.

Zum problemlosen und schnellen Befüllen des Aggregates kann ferner vorteilhaft die Gewindebohrung im Gehäuse des Aggregates nach innen, an den Auslauf des Gewindes anschließend, einen erweiterten Abschnitt aufweisen.

Des weiteren kann der Nenndurchmesser der Befüllschraube und/oder Ablassschraube größer ausgeführt sein als weitere Befestigungsschrauben für das Anbauteil. Dies ist insbesondere dann von Vorteil, wenn die Befestigungsschrauben relativ geringe Nenndurchmesser aufweisen (z. B. M5 oder M6) und damit nur eine relativ langsame Befüllung gegeben wäre.

Das Anbauteil kann besonders bevorzugt ein seitlicher oder stirnseitiger Gehäuseflansch des Aggregates sein. Bei derartigen Flanschen sind die Befestigungsschrauben im wesentlichen kreisförmig um den Flansch ausgebildet und es ist konstruktiv besonders einfach, das Schraubenbild so auszulegen, dass eine Befestigungsschraube exakt als Befüllschraube und/oder Ablassschraube verwendbar ist. Derartige Flansch-Befestigungsschrauben sind in der Regel auch gut zugänglich positioniert.

Schließlich kann bevorzugt das Aggregat ein Differenzial an einer angetriebenen Achse des Kraftfahrzeuges oder ein Geschwindigkeits-Wechselgetriebe des Kraftfahrzeuges mit integriertem Differenzial sein, wobei der Gehäuseflansch der für die Montage des Differenziaigetriebes in das Gehäuse erforderliche stirnseitige oder seitliche Gehäuseflansch ist.

Ein Ausführungsbeispiel der Erfindung ist im folgenden mit weiteren Einzelheiten näher erläutert. Die schematische Zeichnung zeigt in:
- **Fig. 1**: ein Antriebsaggregat für ein frontgetriebenes Kraftfahrzeug, mit einer Brennkraftmaschine und einem Geschwindigkeits-Wechselgetriebe mit integriertem Differenzial und mit einer am Gehäuseflansch des Differenziales angeordneten Befüllschraube für Hypoidöl; und
- **Fig. 2**: einen horizontalen Schnitt gemäß Linie II - II der Fig. 1 durch das Gehäuse des Differenziales und des Gehäuseflansches im Bereich einer Befüllschraube.

Das nur grob schematisch skizzierte Antriebsaggregat 10 für ein frontgetriebenes Kraftfahrzeug weist eine Brennkraftmaschine 12 und ein an die Brennkraftmaschine 12 angeflanschtes Geschwindigkeits-Wechselgetriebe 14 mit einem integrierten Differenzial 16 auf.

Die einzelnen Aggregate wie Brennkraftmaschine 12, Wechselgetriebe 14 und Differenzial 16 sind in bekannter Weise mit Schmiermittel bzw. gegebenenfalls Hydraulikfluid befüllt; so ist in die Brennkraftmaschine innerhalb deren Ölwanne 12a Motoröl, in das Wechselgetriebe 14 Getriebeöl oder im Falle eines Automatikgetriebes ATF Hydraulikfluid und in das Differenzial 16 Hypoidöl eingefüllt.

Anstelle einer separaten Befüllschraube bekannter Bauart kann an der Brennkraftmaschine 12 eine ohnehin vorhandene Befestigungsschraube für ein Anbauteil (nicht dargestellt) mit gehäuseseitig durchgehender Gewindebohrung als Befüllschraube vorgesehen sein.

Des gleichen kann an dem Wechselgetriebe 14 an dessen stirnseitigem Gehäuseflansch 14a eine Befestigungsschraube als Befüllschraube ausgebildet sein, über die Getriebeöl oder ATF Hydrauliköl einfüllbar ist.

Ferner ist an dem seitlichen Gehäuseflansch 18 des Differenziales 16 eine der etwa kreisförmig angeordneten Befestigungsschrauben 20 als Befüllschraube 22 für Hypoidöl ausgeführt.

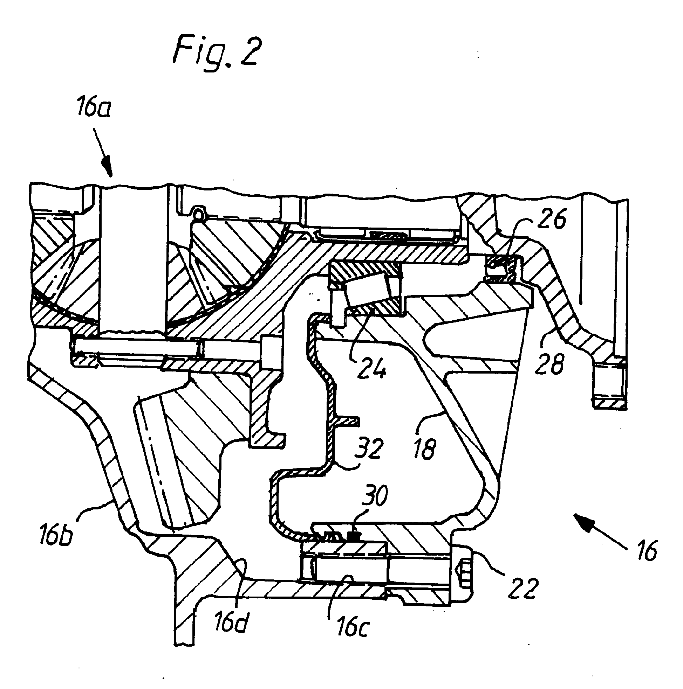

Die **Fig. 2** zeigt abschnittsweise das in das Wechselgetriebe 14 integrierte Differenzial 16, das als an sich bekanntes Kegelraddifferenzial ausgeführt und deshalb nicht weiter beschrieben ist.

Das Differenzialgetriebe 16a ist in dem Gehäuse 16b angeordnet und seitlich durch den etwa ringförmigen Gehäuseflansch 18 abgeschlossen, in dem auch das eine Kegelrollenlager 24 des Differenzialgetriebes 16a und ein Wellendichtring 26 für den öldichten Durchtritt der einen Flanschwelle 28 angeordnet sind.

Der Gehäuseflansch 18 ist mit dem Gehäuse 16b des Differenziales 16 mittels der um den Umfang des Gehäuseflansches 18 verteilten, mehreren Befestigungsschrauben 20 unter Zwischenschaltung einer Ringdichtung 30 befestigt. Die Befestigungsschrauben 20 sind in dem Horizontalschnitt gemäß **Fig. 2** nicht ersichtlich und können in bekannter Weise in entsprechende Gewindebohrungen am Gehäuse 16b eingeschraubt sein. Zwischen dem Gehäuse 16b und dem Gehäuseflansch 18 ist ein Ölfangblech 32 wie ersichtlich angeordnet.

Ferner ist die Befüllschraube 22 in eine in das Gehäuseinnere durchgehende Gewindebohrung 16c des Gehäuses 16b eingeschraubt und schließt diese somit ab. Gegebenenfalls könnte zwischen dem Gehäuseflansch 18 und dem Kopf der Befüllschraube 22 ein Dichtring vorgesehen sein.

Am Auslauf der Gewindebohrung 16c ist dem Gehäuseinneren zugewandt ein erweiterter Abschnitt 16d in das Gehäuse 16b eingearbeitet, der den Abfluss des einzufüllenden Hypoidöles in das Gehäuseinnere begünstigt.

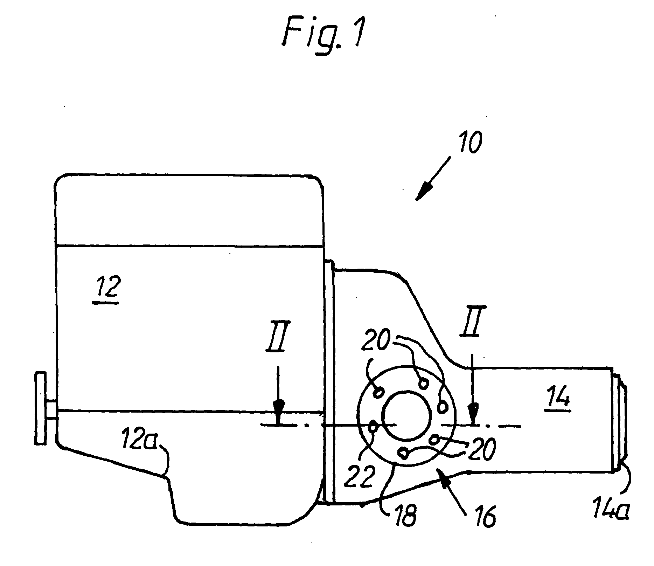

Die Befüllschraube 22 ist in einer Höhe in Relation zum Differenzial 16 (vgl. **Fig. 1**, = Schnittebene) angeordnet, die dem vorgegebenen Niveau bzw. Füllstand an Hypoidöl des Differenziales 16 entspricht.

Der Kopf der Befüllschraube 22 kann mit einer Farbkennzeichnung versehen sein oder es kann eine Formkennzeichnung vorgesehen sein, z. B. mit einer definierten Außen- oder Innenkonfiguration des Kopfes für den Angriff eines Spezialwerkzeuges zum Betätigen der Befüllschraube 22.

Sofern der Nenndurchmesser der Befestigungsschrauben 20 relativ gering ist und somit die Befüllung über die Befüllschraube 22 gleichen Nenndurchmessers erschwert wäre, kann der Nenndurchmesser der Befüllschraube 22 größer als der Nenndurchmesser der Befestigungsschrauben 20 ausgeführt sein.

Nach der Montage des betreffendes Aggregates, im Ausführungsbeispiel des Differenziales 16 im Wechselgetriebe 14, wird die Befüllschraube 22 herausgeschraubt (oder bei der Montage nicht verbaut) und durch die Gewindebohrung 16c hindurch das Hypoidöl bis zum Erreichen des vorgegebenen Füllstandes eingefüllt. Danach wird die Befüllschraube 22 wie die übrigen Befestigungsschrauben 20 zur Befestigung des Gehäuseflansches 18 am Gehäuse 16b mit dem vorgegebenen Anzugsmoment eingeschraubt.

## Patentansprüche

1. Vorrichtung zum Befüllen oder Entleeren eines Aggregates mit Schmiermittel und/oder Hydraulikfluid, insbesondere in Kraftfahrzeugen, mit einer Befüllschraube und/oder Ablassschraube, die in eine durchgehende Gewindebohrung des Gehäuses des Aggregates eingeschraubt ist, **dadurch gekennzeichnet, dass** die Befüllschraube (22) und/oder Ablassschraube eine am Aggregat (12, 14, 16) ohnehin vorhandene Schraube ist, die als Befestigungsschraube ein Anbauteil (14a, 18) am Gehäuse des Aggregates (12, 14, 16) durchdringt, wobei die korrespondierende Gewindebohrung im Gehäuse durchgehend ausgeführt ist.

2. Vorrichtung nach Anspruch 1, **dadurch gekennzeichnet, dass** die Befüllschraube (22) und/oder Ablassschraube eine Farb- und/oder Formkennzeichnung an deren Kopf aufweist.

3. Vorrichtung nach Anspruch 1 oder 2, **dadurch gekennzeichnet, dass** die Befüllschraube (22) in einer Höhe am Gehäuse (16b) des Aggregates (16) angeordnet ist, die dem vorgegebenen Füllstand des Fluids entspricht.

4. Vorrichtung nach einem oder mehreren der vorhergehenden Ansprüche, **dadurch gekennzeichnet, dass** die Gewindebohrung (16c) im Gehäuse (16b) des Aggregates (16) nach innen, an den Auslauf des Gewindes (16c) anschließend, einen erweiterten Abschnitt (16d) aufweist.

5. Vorrichtung nach einem oder mehreren der vorhergehenden Ansprüche, **dadurch gekennzeichnet, dass** der Nenndurchmesser der Befüllschraube (22) und/oder Ablassschraube größer ausgeführt ist als weitere Befestigungsschrauben (20) für das Anbauteil (18).

6. Vorrichtung nach einem oder mehreren der vorhergehenden Ansprüche, **dadurch gekennzeichnet, dass** das Anbauteil ein seitlicher oder stirnseitiger Gehäuseflansch (14a, 18) ist.

7. Vorrichtung nach einem oder mehreren der vorhergehenden Ansprüche, **dadurch gekennzeichnet, dass** das Aggregat ein Differenzial (16) an einer angetriebenen Achse des Kraftfahrzeuges ist.

8. Vorrichtung nach einem oder mehreren der vorhergehenden Ansprüche, **dadurch gekennzeichnet, dass** das Aggregat ein Geschwindigkeits-Wechselgetriebe (14) des Kraftfahrzeuges mit integriertem Differenzial (16) ist und dass der Gehäuseflansch (18) der für die Montage des Differenzialgetriebes (16a) erforderliche seitliche Gehäuseflansch (18) ist.
